# EUROPÄISCHE PATENTSCHRIFT

(11) **EP 1 843 142 B1**
(45) Veröffentlichungstag und Bekanntmachung des Hinweises auf die Patenterteilung: **14.12.2011**
(21) Anmeldenummer: 07006002.5
(22) Anmeldetag: 23.03.2007
(51) Int. Cl.: G01M 7/00, G01M 17/04, G01M 13/00

(54) **Vorrichtung und Verfahren zur Prüfung des Spiels von Gelenken an Fahrzeugen**
Device and method for testing the play of articulations on vehicles
Dispositif et procédé destiné à la vérification du jeu d'articulations sur véhicules

(30) Priorität: 04.04.2006 DE 102006016076
(43) Veröffentlichungstag der Anmeldung: 10.10.2007
(73) Patentinhaber: Rogg, Werner, 78056 Villingen-Schwenningen (DE)
(72) Erfinder: Rogg, Werner, 78056 Villingen-Schwenningen (DE)
(74) Vertreter: Patentanwälte Westphal, Mussgnug & Partner

(56) Entgegenhaltungen:
- EP-A1- 1 236 996
- DE-A1- 1 912 141
- DE-A1- 4 208 014
- DE-A1- 19 535 686
- DE-A1- 19 937 124
- DE-T2- 69 121 155
- US-A- 5 025 655
- US-A- 5 686 652
- US-A1- 2002 000 126

## Beschreibung

Die Erfindung betrifft eine Vorrichtung und ein Verfahren zur Prüfung des Spiels von Gelenken an Fahrzeugen.

Aus der DE 20 35 102 A1 ist ein Verfahren und eine Vorrichtung zur Feststellung von fehlerhaften oder fehlerhaft montierten Bauteilen in Baueinheiten der Kraftübertragungssysteme für Kraftfahrzeuge bekannt, welche darauf beruhen, die Baueinheit durch einen eigenen Motor mit konstanter Drehzahl im Leerlauf anzutreiben und das von umlaufenden Teilen herrührende Laufgeräusch durch einen an einem Teil der Baueinheit lösbar befestigten Messkopf zu erfassen. Dabei wird der Messkopf an dem Gehäuse der Baueinheit angeordnet, da davon ausgegangen wird, dass ein fehlerhaftes oder fehlerhaft montiertes Bauteil Laufgeräusche verursacht, welche ebenfalls auf das Gehäuse übertragen werden. Dieses Verfahren ist jedoch vergleichsweise ungenau, da die gesamte Baueinheit in Vibrationen versetzt wird und ein exaktes Lokalisieren des fehlerhaften oder fehlerhaft montierten Bauteils schwierig ist.

Die DE 199 37 124 A1 offenbart ein Verfahren und eine Vorrichtung zum Prüfen der Gelenke von Radaufhängungen von Kraftfahrzeugen, bei welchem an zumindest einem Teil der Radaufhängung ein Vibrationsmotor befestigt wird, mittels dem den Radaufhängungsteilen hochfrequente Schwingungen aufgeprägt werden, wobei dann die Gelenke auf unterschiedliche Art und Weise geprüft werden können. Nachteilig bei diesem Verfahren bzw. bei dieser Vorrichtung ist, dass die gesamte Radaufhängung in Schwingung versetzt werden muss, wozu ein entsprechend leistungsstarker Motor vonnöten ist. Des Weiteren ist auch bei diesem Verfahren eine exakte Lokalisierung eines fehlerhaften Gelenkes nicht ohne Weiteres möglich. Der Defekt kann bspw. akustisch erkannt werden, indem dieses Gelenk deutlich hörbare Geräusche abstrahlt oder indem eine Prüfperson die entsprechenden Gelenke mit der Hand abtastet, wobei defekte Gelenke durch deutliches Rütteln oder Brummen erkennbar sind. Eine derartige Überprüfung ist jedoch mit großen Fehlern behaftet. Um den Vibrationsmotor an der Radaufhängung befestigen zu können, ist es dabei vonnöten, ein entsprechendes Rad des Fahrzeugs zu demontieren. Eine derartige Montage nur zur Überprüfung der Gelenke ist jedoch aufwendig.

Die DE 1912141 beschreibt eine Einrichtung zur Ermittlung einer Klapperstelle an einem mechanischen Gerät, bei der das Gerät durch die Einrichtung in mechanische Schwingungen mit einer im Hörbereich liegenden Frequenz versetzt wird. Die Einrichtung umfasst ein Tastglied, das durch einen elektromechanischen Antrieb zu mechanischen Schwingungen angeregt wird.

Die Aufgabe der Erfindung liegt daher darin, eine kostengünstige Vorrichtung zur Prüfung des Spiels von Gelenken an Fahrzeugen bereitzustellen, mit welchen zuverlässig und einfach ein defektes Gelenk erkannt werden kann, ohne das größere bauliche Maßnahmen vonnöten sind.

Weiterhin besteht die Aufgabe der Erfindung darin, ein entsprechendes Verfahren zur Prüfung des Spiels von Gelenken an Fahrzeugen bereitzustellen, welches einfach angewendet werden kann.

Die erfindungsgemäße Vorrichtung zur Prüfung des Spiels von Gelenken an Fahrzeugen weist eine erste Vorrichtung zur Erzeugung von Schwingungen, welche über ein Verlängerungselement mit einem Anlageelement zur Anlage der Vorrichtung an ein zu vermessendes Bauteil verbunden ist, und eine zweite Vorrichtung zur Aufnahme der in dem Bauteil erzeugten Schwingungen auf. Die erfindungsgemäße Vorrichtung ist somit über das Anlageelement an jeder beliebigen Stelle des Fahrzeugs, beispielsweise der Radaufhängung oder sonstigen Kraftübertragungssystemen anlegbar. Damit kann gezielt eine Stelle zwischen zwei Gelenken oder in der Nähe eines zu überprüfenden Gelenkes ausgewählt werden, um vorwiegend dieses Bauteil in Schwingungen zu versetzen. Die in dem Bauteil erzeugten Schwingungen werden von der zweiten Vorrichtung dadurch, dass die Vorrichtung direkt an das Bauteil angelegt wird, direkt gemessen und entsprechend ausgewertet. Die Auslenkungen des Bauteils sind proportional zum Spiel des entsprechenden Bauteils, wobei ein Spiel durch Verschleißerscheinungen z. B. in der Lagerung des Gelenkkopfes oder insbesondere bei fehlerhaften oder fehlerhaft montierten Bauteilen auftreten kann. Ein nicht defektes oder ein nicht defekt angebrachtes Bauteil, also ein Bauteil mit sehr geringem bis gar keinem Spiel, wird kaum in Schwingungen versetzt. Durch Vergleich der Amplituden der in dem Bauteil erzeugten Schwingungen kann daher darauf geschlossen werden, ob es sich um ein defektes oder ein defekt angebrachtes Bauteil, d. h. ein Bauteil mit großem Spiel, handelt. Durch das Verlängerungselement zwischen der ersten Vorrichtung zur Erzeugung von Schwingungen und dem Anlageelement ist es insbesondere möglich, auch schwer zugängliche Bauteile innerhalb des Fahrzeugs zuverlässig und gezielt zu vermessen, ohne dass eine größere Baugruppe an Bauteilen in Schwingungen versetzt werden muss. Dadurch ist insbesondere auch die Verwendung eines weniger leistungsstarken Motors möglich, da nur gezielt einzelne Bauteile in Schwingung versetzt werden müssen.

Erfindungsgemäß ist die Vorrichtung als Handgerät ausgebildet. Dadurch lässt sich die Vorrichtung besonders einfach handhaben und kann auch in schwer zugänglichen Bereichen des Fahrzeugs gehandhabt werden.

Erfindungsgemäß ist die erste Vorrichtung als exzentrischer Motor ausgebildet, um dadurch die Schwingungen besonders einfach erzeugen zu können. Dabei ist vorzugsweise der Motor entweder elektrisch, pneumatisch oder hydraulisch antreibbar. Insbesondere Druckluft eignet sich besonders gut zum Antreiben des Motors der ersten Vorrichtung, da in der Regel in Kraftfahrzeugwerkstätten grundsätzlich Druckluftanschlüsse vorhanden sind.

Bei einer vorteilhaften Weiterbildung der Erfindung ist die Frequenz und/oder die Amplitude des Motors variabel, um die Vorrichtung bei der Prüfung unterschiedlich dimensionierter Bauteile einsetzen zu können. Dabei wird vorzugsweise die Frequenz des Motors zwischen etwa 15 Hz und etwa 400 Hz variiert.

Bei einer vorteilhaften Ausgestaltung der Erfindung ist die erste Vorrichtung in einem Handgriff der Vorrichtung angeordnet, wodurch die Vorrichtung mit einer Hand einfach zu handhaben ist und kein separater Motor vonnöten ist.

Vorteilhafterweise ist das Verlängerungselement als Stange ausgebildet. Dabei ist die erste Vorrichtung an dem einen freien Ende der Stange und das Anlageelement an dem zweiten Ende der Stange angeordnet, wodurch ermöglicht wird, dass das eine Ende der Stange, welches als Handgriff ausgebildet sein, kann mit einer Hand gehalten werden kann, während das Anlageelement am anderen Ende der Stange an das entsprechende Bauteil, welches insbesondere an schwer zugänglichen Stellen innerhalb des Kraftfahrzeugs liegen kann, angelegt werden kann. Dabei ist eine Stange insbesondere kostengünstig zu fertigen.

Vorzugsweise ist die Stange gerade oder gebogen oder angewinkelt oder durch ein Gelenk unterteilt ausgebildet. Dadurch wird ermöglicht, mit der Vorrichtung das Anlageelement an einem Ende der Stange auch in unterschiedlich geometrisch ausgebildete Baugruppen innerhalb von Fahrzeugen zu platzieren.

Bei einer vorteilhaften Ausgestaltung der Erfindung weist das Anlageelement eine Anlagekontur auf, mittels welcher das Anlageelement an einem Bauteil angelegt werden kann. Insbesondere, wenn häufig gleiche Bauteile vermessen werden sollen, kann die Anlagekontur den Ausmaßen dieses Bauteils entsprechen, so dass sich eine formschlüssige Anlagefläche ergibt, wodurch das Anlageelement sicher auf dem entsprechenden Bauteil halten wird.

Vorzugsweise weist das Anlageelement eine Befestigungsvorrichtung auf, da im Betrieb der Vorrichtung die von der ersten Vorrichtung erzeugten Schwingungen auf das Bauteil übertragen werden sollen, wobei die Gefahr besteht, dass das Anlageelement von dem Bauteil abrutschen könnte. Dies wird durch eine Befestigungsvorrichtung zuverlässig verhindert. Dabei kann die Befestigungsvorrichtung beispielsweise als Klemmzange, Schraubhalterung, Magnethalterung, schraubstockartige Halterung oder Anlageschelle ausgebildet sein. Wichtig ist dabei, dass die Befestigungsvorrichtung einfach und schnell angelegt und wieder gelöst werden kann. In der Regel ist die Befestigungsvorrichtung dabei von Hand bedienbar, es ist aber auch vorstellbar, die Befestigungsvorrichtung elektrisch, pneumatisch oder hydraulisch zu betreiben.

Bei einer besonders vorteilhaften Ausgestaltung der Erfindung ist die zweite Vorrichtung in oder an dem Verlängerungselement oder dem Anlageelement angeordnet. Vorzugsweise ist dabei die zweite Vorrichtung möglichst nahe an dem Teil der Vorrichtung angeordnet, welche mit dem Bauteil in Berührung kommt, um die in dem Bauteil erzeugten Schwingungen möglichst zuverlässig aufnehmen zu können.

Zur Detektion der Schwingungen des Bauteils ist die zweite Vorrichtung vorzugsweise als Beschleunigungssensor, besonders bevorzugt als ein- oder zweiachsiger Beschleunigungssensor, ausgebildet, um die Schwingungen entlang wenigstens einer, bevorzugt jedoch entlang zwei Achsen, detektieren zu können.

Vorteilhafterweise weist der Beschleunigungssensor eine variable Reaktionszeit auf, wodurch die Ansprechempfindlichkeit variiert werden und das Ansprechverhalten der zweiten Vorrichtung auf die Frequenz der ersten Vorrichtung abgestimmt werden kann.

Um die in dem Bauteil erzeugten Schwingungen, welche von der zweiten Vorrichtung detektiert werden, darstellen zu können, ist die zweite Vorrichtung mit einem Amplitudendarsteller, vorzugsweise einem Oszilloskop, verbunden. Insbesondere ist dabei die zweite Vorrichtung über eine Funkverbindung oder ein Kabel mit dem Amplitudendarsteller verbunden, um die von der zweiten Vorrichtung ermittelten Daten aus dem Fahrzeuginneren besonders einfach an den Amplitudendarsteller übertragen zu können.

Vorzugsweise weist der Amplitudendarsteller eine optische und/oder akustische digitale und/oder analoge Ausgabeeinrichtung auf, auf welcher die Amplituden der in dem Bauteil erzeugten Schwingungen direkt dargestellt werden können.

Je nach Größe des zu vermessenden Bauteils kann es vonnöten sein, die Masse der Vorrichtung zu variieren, was beispielsweise durch an der Vorrichtung anbringbare Zusatzmassen ermöglicht wird.

Das erfindungsgemäße Verfahren zur Prüfung des Spiels von Gelenken an Fahrzeugen besteht darin, zunächst mittels einer ersten Vorrichtung Schwingungen zu erzeugen, welche mittels eines Anlageelements, das über ein Verlängerungselement mit der ersten Vorrichtung verbunden ist, an ein zu vermessendes Bauteil übertragen werden, und wobei anschließend mittels einer zweiten Vorrichtung die in dem Bauteil erzeugten Schwingungen aufgenommen werden.

Die Erfindung wird anhand der nachfolgenden Figuren ausführlich erläutert. Es zeigt:
- Figur 1: eine perspektivische Ansicht eines ersten Ausführungsbeispiels einer Vorrichtung zur Prüfung des Spiels von Gelenken an Fahrzeugen und
- Figur 2: eine perspektivische Ansicht eines zweiten Ausführungsbeispiels einer Vorrichtung zur Prüfung des Spiels von Gelenken an Fahrzeugen.

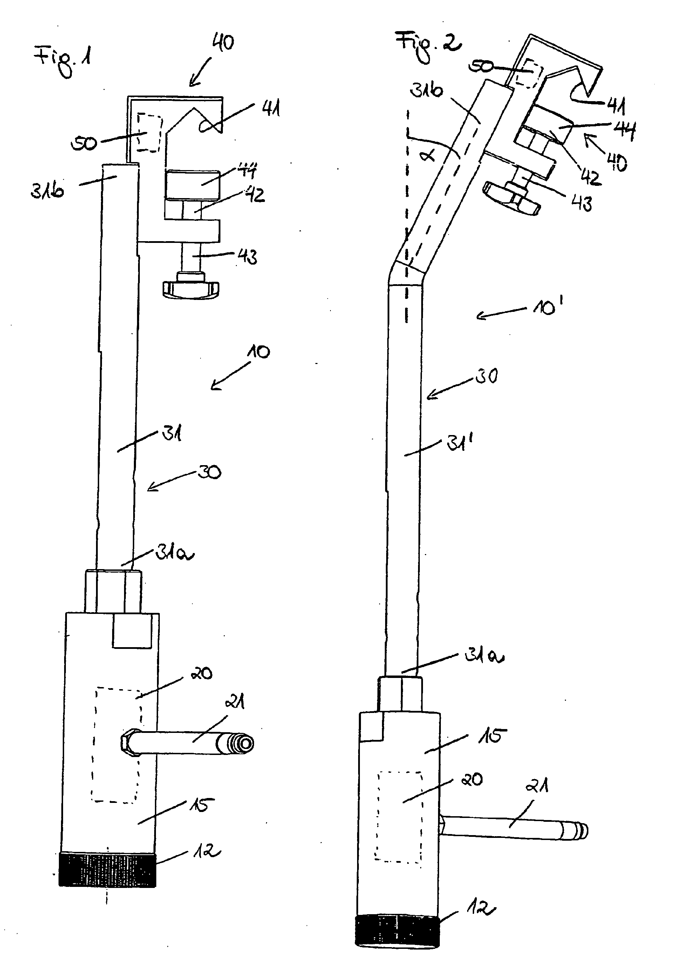

Figur 1 zeigt ein erstes Ausführungsbeispiel einer Vorrichtung 10 zur Prüfung des Spiels von Gelenken an Fahrzeugen mit einer ersten Vorrichtung 20 zur Erzeugung von Schwingungen, welche über ein Verlängerungselement 30 mit einem Anlageelement 40 zur Anlage der Vorrichtung 10 an ein zu vermessendes Bauteil verbunden ist, und einer zweiten Vorrichtung 50 zur Aufnahme der in dem Bauteil erzeugten Schwingungen.

Die erste Vorrichtung 20 ist in einem Handgriff 15 der als Handgerät ausgebildeten Vorrichtung 10 angeordnet. Die erste Vorrichtung 20 ist dabei nur durch eine gestrichelte Linie angedeutet dargestellt. Die erste Vorrichtung 20 ist dabei als exzentrischer Motor, insbesondere als Hubkolbenmotor, ausgebildet sein und kann elektrisch, pneumatisch oder hydraulisch antreibbar ist. Bei einem pneumatischen Antrieb wird die Druckluft über einen an dem Handgriff 15 angeordneten Druckluftanschluss 21 zugeführt. Dabei ist vorzugsweise die Frequenz und/oder die Amplitude des Motors der ersten Vorrichtung 20 variabel, beispielsweise über einen nicht dargestellten Drehregler, welcher zur einfachen Bedienung ebenfalls an dem Handgriff 15 angeordnet ist. Die Frequenz des Motors ist dabei zwischen etwa 15 Hz und etwa 100 Hz regelbar, beispielsweise durch Regelung des Steuerdrucks. Über die Amplitude des Motors wird die Stärke der Ausschläge der Vorrichtung 10, welche auf das zu vermessende Bauteil übertragen werden, variiert, um die Schwingungen optimal an das zu vermessende Bauteil anzupassen.

Das Verlängerungselement 30 ist als Stange 31 mit einem ersten Ende 31a und einem zweiten Ende 31b ausgebildet. Dabei ist der Handgriff 15, in welchem die erste Vorrichtung 20 angeordnet ist, an dem ersten Ende 31a der Stange angeordnet. In dem in Figur 1 dargestellten Ausführungsbeispiel ist die Stange 31 dabei als gerade zylindrische Vollprofilstange ausgebildet, welche beispielsweise aus Stahl gefertigt ist.

An dem zweiten Ende 31b der Stange 31 des Verlängerungselements 30 ist das Anlageelement 40 angeordnet, welches vorzugsweise eine Anlagekontur 41 zur Anlage des Anlageelements an das zu vermessende Bauteil aufweist. Über die Anlagekontur 41 kann bereits eine formschlüssige Verbindung zwischen dem Anlageelement 40 und dem zu vermessenden Bauteil hergestellt werden. Da jedoch kräftige Schwingungen auf das Bauteil übertragen werden sollen und die Gefahr besteht, dass das Anlageelement 40 von dem Bauteil abrutschen könnte, weist das Anlageelement 40 eine Befestigungsvorrichtung 42 auf, welche vorliegend als Schraubhalterung mit einer Schraube 43 und einem Klemmelement 44 ausgebildet ist. Bei Eindrehen der Schraube 43 wird das Klemmelement 44 in Richtung der Anlagekontur 41 verschoben und klemmt das zu vermessende Bauteil zwischen dem Klemmelement 44 und der Anlagekontur 41 fest. Alternativ kann die Befestigungsvorrichtung auch als Klemmzange, Magnethalterung, wobei ein Permanentmagnet oder ein elektrischer Magnet verwendet werden kann, schraubstockartige Halterung oder Anlageschelle ausgebildet sein.

In dem Anlageelement 40, alternativ jedoch auch an dem Anlageelement oder im Bereich des zweiten Endes 31b der Stange 31 des Verlängerungselements 30 ist die zweite Vorrichtung 50 zur Aufnahme der in dem Bauteil erzeugten Schwingungen angeordnet. Die zweite Vorrichtung 50 ist dabei nur durch eine gestrichelte Linie angedeutet. Die Anordnung der zweiten Vorrichtung 50 an dem der ersten Vorrichtung 20 gegenüberliegenden Ende 31b der Stange 31 bewirkt, dass die zweite Vorrichtung 50 möglichst nahe an dem in Schwingung versetzten Bauteil angeordnet ist, so dass die in dem Bauteil erzeugten Schwingungen zuverlässig von der zweiten Vorrichtung 50 detektiert werden können. Dazu ist die zweite Vorrichtung 50 als Beschleunigungssensor, insbesondere als zweiachsiger Beschleunigungssensor ausgebildet, um die Schwingung in zueinander senkrecht stehenden Achsen aufzunehmen.

Bei Variation der Frequenz der ersten Vorrichtung 20 ist es nötig, auch den Beschleunigungssensor in seiner Ansprechempfindlichkeit auf die Frequenz der ersten Vorrichtung 20 abzustimmen, wozu der Beschleunigungssensor der zweiten Vorrichtung 50 eine variable Reaktionszeit aufweist.

Die zweite Vorrichtung 50 ist mit einem nicht dargestellten Amplitudendarsteller, beispielsweise einem Oszilloskop oder einem Computer, verbunden, wobei die Verbindung entweder über einen in der Vorrichtung 10 verlaufendes Kabel oder eine Funkschnittstelle realisiert werden kann. Die zweite Vorrichtung 50 überträgt damit die in dem Bauteil aufgenommenen Schwingungen direkt an den Amplitudendarsteller, wo sie optisch und/oder akustisch digital und/oder analog dargestellt und auch direkt ausgewertet werden können. Eine optische oder graphische Ausgabe kann in dem auf dem Oszilloskop dargestellten analogen Signal oder einem digitalen Wert für die Maximalamplitude oder auch in einer Anzeige in grün für "nicht defekt" oder rot für "defekt" bestehen, wenn die aufgenommenen Schwingungen direkt ausgewertet werden. Die Höhe der Amplituden, die beispielsweise auf dem Oszilloskop dargestellt werden, sind abhängig von der Frequenz des Motors der ersten Vorrichtung 20 und dem Betrag der Masse der Stange 31 zwischen der ersten Vorrichtung 20 und der zweiten Vorrichtung 50. Welche Frequenzen der ersten Vorrichtung 20 oder Massen der Stange 31 zu den größten Amplituden führen, kann durch Tests empirisch ermittelt werden. Dazu ist von Vorteil, wenn die Masse der Vorrichtung, insbesondere die Masse der Stange 31, variabel ist. Dazu können beispielsweise an dem Handgriff 15 Zusatzmassen 12 angeordnet werden, um das Gewicht der Vorrichtung 10 zu verändern, wodurch die Frequenz oder die Amplitude der auf das Bauteil übertragenen Schwingungen beeinflusst werden.

In Figur 2 ist ein zweites Ausführungsbeispiel einer Vorrichtung 10' zur Prüfung des Spiels von Gelenken an Fahrzeugen dargestellt. Gleiche Teile der Vorrichtung 10' sind mit identischen Bezugsziffern wie die entsprechenden Teile der Vorrichtung 10 bezeichnet.

Die Vorrichtung 10' unterscheidet sich von der in Figur 1 dargestellten Vorrichtung 10 nur durch die Ausgestaltung des Verlängerungselements 30. Dieses ist als Stange 31' ausgebildet, wobei das zweite Ende 31b der Stange 31' gegenüber der Längsachse um einen Winkel α abgewinkelt ist. Dadurch wird es ermöglicht, das Anlageelement auch an schwer zugänglichen Bauteilen innerhalb einer Baugruppe anzulegen.

Die Vorrichtungen 10, 10' ermöglichen es, die von der ersten Vorrichtung erzeugten Schwingungen über das an dem Verlängerungselement 30 angeordnete Anlageelement 40 direkt auf ein zu vermessendes Bauteil einer Baugruppe aufzubringen, ohne die gesamte Baugruppe in Schwingungen versetzen zu müssen. Einerseits ist es damit möglich, auch schwer zugänglich liegende Bauteile einer Baugruppe direkt zu vermessen, wobei der Motor der ersten Vorrichtung 20 geringer dimensioniert werden kann, da nur einzelne Bauteile und nicht mehr vollständige Baugruppen in Schwingungen versetzt werden müssen. Zudem können Defektstellen gezielt aufgespürt werden. Durch entsprechende Wahl der Frequenz der ersten Vorrichtung 20 werden die vermessenen Bauteile in Schwingungen versetzt, wodurch eine Auslenkung erzeugt wird, die ein Maß für das Spiel des entsprechenden Bauteils bzw. der das entsprechende Bauteil haltenden Gelenke darstellt.

Bezugszeichenliste
- 10: Vorrichtung
- 10': Vorrichtung
- 12: Zusatzmasse
- 15: Handgriff

- 20: erste Vorrichtung
- 21: Druckluftanschluss

- 30: Verlängerungselement
- 31: Stange
- 31': Stange
- 31a: erstes Ende
- 31b: zweites Ende

- 40: Anlageelement
- 41: Anlagekontur
- 42: Befestigungsvorrichtung
- 43: Schraube
- 44: Klemmelement

- 50: zweite Vorrichtung

- α: Winkel

## Patentansprüche

1. Vorrichtung (10, 10') zur Prüfung des Spiels von Gelenken an Fahrzeugen mit einer ersten Vorrichtung (20) zur Erzeugung von Schwingungen, wobei die erste Vorrichtung (20) als exzentrischer Motor ausgebildet ist, und einer zweiten Vorrichtung (50) zur Aufnahme der in dem Bauteil erzeugten Schwingungen,
**dadurch gekennzeichnet, dass** die Vorrichtung (10, 10') als Handgerät ausgebildet ist und die erste Vorrichtung über ein Verlängerungselement (30) mit einem Anlageelement (40) zur direkten Anlage der Vorrichtung (10, 10') an ein zu vermessenes Bauteil verbunden ist.

2. Vorrichtung nach Anspruch 1,
**dadurch gekennzeichnet, dass** der Motor elektrisch, pneumatisch oder hydraulisch antreibbar ist.

3. Vorrichtung nach Anspruch 1 oder 2,
**dadurch gekennzeichnet, dass** die Frequenz und/oder die Amplitude des Motors variabel ist.

4. Vorrichtung nach Anspruch 3,
**dadurch gekennzeichnet, dass** die Frequenz des Motors zwischen 15 Hz und 400 Hz variierbar ist.

5. Vorrichtung nach einem der vorhergehenden Ansprüche,
**dadurch gekennzeichnet, dass** die erste Vorrichtung (20) in einem Handgriff (15) angeordnet ist.

6. Vorrichtung nach einem der vorhergehenden Ansprüche,
**dadurch gekennzeichnet, dass** das Verlängerungselement (30) als Stange (31, 31') ausgebildet ist.

7. Vorrichtung nach Anspruch 6,
**dadurch gekennzeichnet, dass** die Stange (31, 31') gerade oder gebogen oder abgewinkelt oder durch ein Gelenk unterteilt ist.

8. Vorrichtung nach einem der vorhergehenden Ansprüche,
**dadurch gekennzeichnet, dass** das Anlageelement (40) eine Anlagekontur (41) aufweist.

9. Vorrichtung nach einem der vorhergehenden Ansprüche,
**dadurch gekennzeichnet, dass** das Anlageelement (40) eine Befestigungsvorrichtung (42) aufweist.

10. Vorrichtung nach Anspruch 9,
**dadurch gekennzeichnet, dass** die Befestigungsvorrichtung (42) als Klemmzange, Schraubhalterung (43, 44), schraubstockartige Halterung, Magnethalterung oder Anlegschelle ausgebildet ist.

11. Vorrichtung nach einem der vorhergehenden Ansprüche,
**dadurch gekennzeichnet, dass** die zweite Vorrichtung (50) in oder an dem Verlängerungselement (30) oder dem Anlageelement (40) angeordnet ist.

12. Vorrichtung nach einem der vorhergehenden Ansprüche,
**dadurch gekennzeichnet, dass** die zweite Vorrichtung (50) als Beschleunigungssensor ausgebildet ist.

13. Vorrichtung nach Anspruch 11,
**dadurch gekennzeichnet, dass** der Beschleunigungssensor als ein- oder zweiachsiger Beschleunigungssensor ausgebildet ist.

14. Vorrichtung nach Anspruch 12 oder 13,
**dadurch gekennzeichnet, dass** der Beschleunigungssensor eine variable Reaktionszeit aufweist.

15. Vorrichtung nach einem der vorhergehenden Ansprüche,
**dadurch gekennzeichnet, dass** die zweite Vorrichtung (50) mit einem Amplitudendarsteller, vorzugsweise einem Oszilloskop, verbunden ist.

16. Vorrichtung nach Anspruch 15,
**dadurch gekennzeichnet, dass** die zweite Vorrichtung (50) über eine Funkverbindung oder ein Kabel mit dem Amplitudendarsteller verbunden ist.

17. Vorrichtung nach Anspruch 15 oder 16,
**dadurch gekennzeichnet, dass** der Amplitudendarsteller eine optische und/oder akustische digitale und/oder analoge Ausgabeeinrichtung aufweist.

18. Vorrichtung nach einem der vorhergehenden Ansprüche,
**dadurch gekennzeichnet, dass** die Masse der Vorrichtung (10, 10') variierbar ist.

19. Verfahren zur Prüfung des Spiels von Gelenken an Fahrzeugen, wobei mittels einer ersten Vorrichtung (20), welche als exzentrischer Motor ausgebildet ist, einer als Handgerät ausgebildeten Vorrichtung (10, 10') Schwingungen erzeugt werden, welche mittels eines Anlageelementes (40), welches über ein Verlängerungselement (30) mit der ersten Vorrichtung (20) verbunden ist, direkt an ein zu vermessendes Bauteil übertragen werden, und wobei mittels einer zweiten Vorrichtung (50) der Vorrichtung (10, 10') die in dem Bauteil erzeugten Schwingungen aufgenommen werden.

## Claims

1. An apparatus (10, 10') for testing the play of articulations on vehicles, with a first apparatus (20) for producing vibrations, wherein the first apparatus (20) is designed in the form of an eccentric motor, and a second apparatus (50) for absorbing the vibrations produced in the component, **characterized in that** the apparatus (10, 10') is designed in the form of a manual appliance, and the first apparatus is connected by way of an extension element (30) to an abutment element (40) for the direct abutment of the apparatus (10, 10') to a component to be measured.

2. An apparatus according to claim 1, **characterized in that** the motor is capable of being driven in an electrical, pneumatic or hydraulic manner.

3. An apparatus according to claim 1 or 2, **characterized in that** the frequency and/or the amplitude of the motor is or are variable.

4. An apparatus according to claim 3, **characterized in that** the frequency of the motor is capable of being varied between 15 Hz and 400 Hz.

5. An apparatus according to any one of the preceding claims, **characterized in that** the first apparatus (20) is arranged in a handle (15).

6. An apparatus according to any one of the preceding claims, **characterized in that** the extension element (30) is designed in the form of a rod (31, 31').

7. An apparatus according to claim 6, **characterized in that** the rod (31, 31') is straight or curved or angled or subdivided by an articulation.

8. An apparatus according to any one of the preceding claims, **characterized in that** the abutment element (40) has an abutment contour (41).

9. An apparatus according to any one of the preceding claims, **characterized in that** the abutment element (40) has a fastening apparatus (42).

10. An apparatus according to claim 9, **characterized in that** the fastening apparatus (42) is designed in the form of clamping pliers, a screw-type holding means (43, 44), a vice-like holding means, a magnetic holding means or an application clip.

11. An apparatus according to any one of the preceding claims, **characterized in that** the second apparatus (50) is arranged in or on the extension element (30) or the abutment element (40).

12. An apparatus according to any one of the preceding claims, **characterized in that** the second apparatus (50) is designed in the form of an acceleration sensor.

13. An apparatus according to claim 11, **characterized in that** the acceleration sensor is designed in the form of a uniaxial or biaxial acceleration sensor.

14. An apparatus according to claim 12 or 13, **characterized in that** the acceleration sensor has a variable reaction time.

15. An apparatus according to any one of the preceding claims, **characterized in that** the second apparatus (50) is connected to an amplitude representation means, preferably an oscilloscope.

16. An apparatus according to claim 15, **characterized in that** the second apparatus (50) is connected by way of radio communication or a cable to the amplitude representation means.

17. An apparatus according to claim 15 or 16, **characterized in that** the amplitude representation means has an optical and/or acoustic digital and/or analogue output device.

18. An apparatus according to any one of the preceding claims, **characterized in that** the mass of the apparatus (10, 10') is capable of being varied.

19. A method of testing the play of articulations on vehicles, wherein vibrations are produced by means of a first apparatus (20) - which is designed in the form of an eccentric motor - of an apparatus (10, 10') designed in the form of a manual appliance, the vibrations being transmitted by means of an abutment element (40) - which is connected by way of an extension element (30) to the first apparatus (20) - directly to a component to be measured, and wherein the vibrations produced in the component are absorbed by means of a second apparatus (50) of the apparatus (10, 10').

## Revendications

1. Dispositif (10, 10') pour contrôler le jeu d'articulations d'un véhicule comportant un premier dispositif (20) générant des vibrations,
* le premier dispositif (20) étant un moteur à excentrique et un second dispositif (50) pour recevoir les vibrations générées dans le composant,
dispositif **caractérisé en ce que**
le dispositif (10, 10') est un appareil à main et le premier dispositif est relié par un élément d'allongement (30) à un élément d'appui (40) pour appuyer directement le dispositif (10, 10') contre le composant à analyser.

2. Dispositif selon la revendication 1,
**caractérisé en ce que**
le moteur est un moteur électrique, pneumatique ou hydraulique.

3. Dispositif selon la revendication 1 ou 2,
**caractérisé en ce que**
la fréquence et/ ou l'amplitude du moteur est variable.

4. Dispositif selon la revendication 3,
**caractérisé en ce que**
la fréquence du moteur varie entre 15 Hz et 400 Hz.

5. Dispositif selon l'une quelconque des revendications précédentes,
**caractérisé en ce que**
le premier dispositif (20) est logé dans une poignée (15).

6. Dispositif selon l'une quelconque des revendications précédentes,
**caractérisé en ce que**
l'élément d'allongement (30) est une tige (31, 31').

7. Dispositif selon la revendication 6,
**caractérisé en ce que**
la tige (31, 31') est droite ou cintrée ou pliée ou subdivisée par une articulation.

8. Dispositif selon l'une quelconque des revendications précédentes,
**caractérisé en ce que**
l'élément d'appui (40) a un contour d'appui (41).

9. Dispositif selon l'une quelconque des revendications précédentes,
**caractérisé en ce que**
l'élément d'appui (40) comporte un dispositif de fixation (42).

10. Dispositif selon la revendication 9,
**caractérisé en ce que**
le dispositif de fixation (42) est une pince, un dispositif de serrage à vis (43, 44), un support en forme d'étau, un support magnétique ou un collier.

11. Dispositif selon l'une quelconque des revendications précédentes,
**caractérisé en ce que**
le second dispositif (50) est prévu dans ou sur l'élément d'allongement (30) ou sur l'élément d'appui (40).

12. Dispositif selon l'une quelconque des revendications précédentes,
**caractérisé en ce que**
le second dispositif (50) est un capteur d'accélération.

13. Dispositif selon la revendication 11,
**caractérisé en ce que**
le capteur d'accélération est un capteur d'accélération à un axe ou à deux axes.

14. Dispositif selon la revendication 12 ou 13,
**caractérisé en ce que**
le capteur d'accélération a un temps de réaction variable.

15. Dispositif selon l'une quelconque des revendications précédentes,
**caractérisé en ce que**
le second dispositif (50) est relié à un dispositif d'affichage d'amplitude, de préférence un oscilloscope.

16. Dispositif selon la revendication 15,
**caractérisé en ce que**
le second dispositif (50) est relié au dispositif d'affichage d'amplitude par une liaison radio ou une liaison par câble.

17. Dispositif selon la revendication 15 ou 16,
**caractérisé en ce que**
le dispositif d'affichage d'amplitude est une installation numérique et/ou analogique optique ou acoustique.

18. Dispositif selon l'une quelconque des revendications précédentes,
**caractérisé en ce que**
la masse du dispositif (10, 10') est variable.

19. Procédé de contrôle du jeu d'articulation de véhicules selon lequel, à l'aide d'un premier dispositif (20) réalisé comme moteur à excentrique d'un dispositif (10, 10') qui est un appareil à main, on génère des vibrations qui, par l'intermédiaire d'un élément d'appui (40) relié par un élément d'allongement (30) au premier dispositif (20), sont transmises directement à un composant à analyser, et à l'aide d'un second dispositif (50) appartenant au dispositif (10, 10'), on reçoit les vibrations générées dans le composant.
